# EUROPEAN PATENT SPECIFICATION

(11) **EP 4 246 196 B1**
(45) Date of publication and mention of the grant of the patent: **07.01.2026**
(21) Application number: 21896777.6
(22) Date of filing: 09.11.2021
(51) Int. Cl.: G02B 6/293, G02B 5/18, G02B 26/08

(54) **OPTICAL PROCESSING DEVICE AND OPTICAL SYSTEM**
OPTISCHE VERARBEITUNGSVORRICHTUNG UND OPTISCHES SYSTEM
DISPOSITIF DE TRAITEMENT OPTIQUE ET SYSTÈME OPTIQUE

(30) Priority: 26.11.2020 CN 202011349303
(43) Date of publication of application: 20.09.2023
(73) Proprietor: Huawei Technologies Co., Ltd., Shenzhen, Guangdong 518129 (CN)
(72) Inventor: ZHANG, Ning, Shenzhen, Guangdong 518129 (CN); ZONG, Liangjia, Shenzhen, Guangdong 518129 (CN); LI, Shimao, Shenzhen, Guangdong 518129 (CN)
(74) Representative: Goddar, Heinz J.
(86) International application number: PCT/CN2021/129561
(87) International publication number: WO 2022/111276

(56) References cited:
- WO-A1-2012/115077
- WO-A1-2016/106521
- CN-A- 104 122 622
- JP-A- 2009 128 578
- JP-A- 2009 128 578
- US-A1- 2009 060 416
- US-A1- 2010 021 167
- US-A1- 2012 002 917
- US-A1- 2014 016 079
- US-A1- 2014 023 316
- US-B2- 8 165 470
- US-B2- 9 977 190

## Description

### TECHNICAL FIELD

This application relates to the field of optical communication technologies, and in particular, to an optical processing apparatus and an optical system.

### BACKGROUND

With the development of emerging services such as cloud computing, VR (virtual reality), AR (augmented reality), and a data center, traffic of an optical network node increases rapidly. In addition, the emerging services have increasingly high requirements on a communication latency and network flexibility. As a result, a ROADM (reconfigurable optical add-drop multiplexer) is gradually adopted by more and more carrier networks. After the ROADM is introduced into a network, a carrier can quickly provide a wavelength-level service, which facilitates network planning and maintenance and reduces operation and maintenance costs.

An optical frequency domain processor based on a liquid crystal on silicon (LCoS) is a core device for implementing the ROADM, and an LCoS-based optical frequency domain processor may be used in a tunable optical filter, an optical signal power equalizer, a wavelength selective switch (WSS), or another scenario.

A working principle of the LCoS is that different voltages are loaded on different pixels of the LCoS. Due to a birefringence effect of a liquid crystal, different voltages correspond to different phase delay amounts, so that a structure similar to a blazed grating is formed. Because a diffraction angle of the blazed grating depends on a grating period of the blazed grating, a diffraction angle of an incident light can be controlled by changing only grating periods corresponding to different positions on the LCoS, to indirectly control a matching degree between diffracted light and an output port, and implement output optical power control. The working principle of the LCoS is based on a diffraction effect. Due to a phase error and an edge field effect of the LCoS, when needed +1-order diffracted light is obtained, 0-order diffracted light or other higher order diffracted light may also be obtained. Diffracted light of these orders produces signal interference.

US 9 977 190 B2 discloses a wavelength selective switch (WSS) includes a liquid crystal on silicon (LCOS) panel and a fiber array with multiple ports. The two outermost ports of the multiple ports are a first port and a second port. An included angle between an intersecting line of the LCOS panel and a first plane in which the incident light entering the LCOS panel and emergent light exiting the LCOS panel are located, and incident light entering the LCOS panel is (90-0) degrees, where a wavelength of the incident light is same as a wavelength of the emergent light, θ is less than 15 degrees, the first port and the included angle of (90-0) degrees are located on a same side of the incident light, and the second port and the included angle of (90-θ) degrees are separately located on two sides of the incident light.

### SUMMARY

The invention provides optical processing apparatuses of claims 1 and 3 and an optical system of claim 7, to reduce signal crosstalk generated by 0-order diffracted light in an LCoS-based optical frequency domain processor.

According to a first aspect, an embodiment of this application provides an optical processing apparatus of claim 1. The apparatus includes an input port, an optical path conversion assembly, an LCoS assembly, and an output port.

The input port is configured to receive a first light beam. The optical path conversion assembly is configured to disperse the first light beam to obtain a second light beam, where the second light beam is a single-wavelength light beam. The LCoS assembly is configured to diffract the second light beam to obtain diffracted light of the second light beam, where the LCoS assembly includes a plurality of pixels, light beams received by the plurality of pixels correspond to different diffraction angles, the diffraction angles are used to control an attenuation degree of the light beams received by the pixels in the optical processing apparatus, and the diffracted light of the second light beam includes 0-order diffracted light and +1-order diffracted light. The optical path conversion assembly is further configured to: transmit the diffracted light of the second light beam, and converge the +1-order diffracted light to the output port, where a transmittance capability of the optical path conversion assembly for the +1-order diffracted light is higher than a transmittance capability for the 0-order diffracted light. The output port is configured to output the received +1-order diffracted light in a collimated manner.

In the optical processing apparatus provided in this embodiment of this application, in a process in which the optical path conversion assembly transmits the diffracted light, when the optical path conversion assembly can converge the +1-order diffracted light to the output port, due to different deflection capabilities of the optical path conversion assembly for the +1-order diffracted light and the 0-order diffracted light, the 0-order diffracted light is partially or completely deviated from the output port, and a loss of the 0-order diffracted light is generated. In this way, the loss of the 0-order diffracted light relieves problems, caused by crosstalk light, of poor stability of the optical frequency domain processor and a small adjustable attenuation range of the optical frequency domain processor.

According to the first aspect, the optical path conversion assembly includes a first deflection component, a second deflection component, and a demultiplexing/multiplexing component. The demultiplexing/multiplexing component is configured to disperse the first light beam passing through the first deflection component to obtain the second light beam. The second deflection component is configured for incidence of the second light beam into the LCoS assembly. That the deflection capabilities on light beams are different may include that deflection effects are different and/or that deflection intensities are different.

A first position and a second position on the second deflection component have different deflection capabilities for a same light beam, where the first position is an illumination position corresponding to the 0-order diffracted light on the second deflection component, and the second position is an illumination position corresponding to the +1-order diffracted light on the second deflection component; and/or a third position and a fourth position on the first deflection component have different deflection capabilities for a same light beam, where the third position is an illumination position corresponding to the 0-order diffracted light on the first deflection component, and the fourth position is an illumination position corresponding to the +1-order diffracted light on the first deflection component.

According to the first aspect, a deflection effect of the first position on the second deflection component on a light beam is a divergence effect, and a deflection effect of the second position on the second deflection component on a light beam is a convergence effect; and/or a deflection effect of the third position on the first deflection component on a light beam is a divergence effect, and a deflection effect of the fourth position on the deflection component on a light beam is a convergence effect.

With reference to the first aspect, in another optional implementation, a transmittance capability of the optical path conversion assembly for the +1-order diffracted light is higher than a transmittance capability for the 0-order diffracted light. A loss of the 0-order diffracted light is further implemented by reducing the transmittance capability for the 0-order diffracted light.

According to a second aspect, an embodiment of this application provides another optical processing apparatus of claim 3. The apparatus may include an input port, an optical path conversion assembly, an LCoS assembly, and an output port.

The input port is configured to receive a first light beam. The optical path conversion assembly is configured to disperse the first light beam to obtain a second light beam, where the second light beam is a single-wavelength light beam. The LCoS assembly is configured to diffract the second light beam to obtain diffracted light of the second light beam, where the LCoS assembly includes a plurality of pixels, light beams received by the plurality of pixels correspond to different diffraction angles, the diffraction angles are used to control an attenuation degree of the light beams received by the pixels in the optical processing apparatus, and the diffracted light of the second light beam includes 0-order diffracted light and +1-order diffracted light. The optical path conversion assembly is further configured to: transmit the diffracted light of the second light beam, and converge the +1-order diffracted light to the output port, where a transmittance capability of the optical path conversion assembly for the +1-order diffracted light is higher than a transmittance capability for the 0-order diffracted light. The output port is configured to output the received +1-order diffracted light in a collimated manner.

In the optical processing apparatus provided in this embodiment of this application, in a process in which the optical path conversion assembly transmits the diffracted light, a transmittance capability of the optical path conversion assembly for the +1-order diffracted light is higher than a transmittance capability for the 0-order diffracted light, so that the 0-order diffracted light is suppressed in a process of being transmitted to the output port, and a loss of the 0-order diffracted light is generated. In this way, the loss of the 0-order diffracted light relieves problems, caused by crosstalk light, of poor stability of the optical frequency domain processor and a small adjustable attenuation range of the optical frequency domain processor.

According to the second aspect, the optical path conversion assembly includes a first deflection component, a second deflection component, and a demultiplexing/multiplexing component; the demultiplexing/multiplexing component is configured to disperse the first light beam passing through the first deflection component to obtain the second light beam; and the second deflection component is configured for incidence of the second light beam into the LCoS assembly.

A first suppression element is disposed on one or more of the first deflection component, the second deflection component, and the demultiplexing/multiplexing component, and the first suppression element is configured to suppress the 0-order diffracted light.

With reference to the second aspect, in another optional implementation, focal lengths of the first deflection component and the second deflection component are a first focal length, and a position of the first suppression element is determined based on the first focal length and an incidence angle of the second light beam on the LCoS assembly.

With reference to the second aspect, in another optional implementation, a deflection capability of the optical path conversion assembly for the 0-order diffracted light is different from a deflection capability for the +1-order diffracted light. When the optical path conversion assembly converges the +1-order diffracted light to the output port, due to different deflection capabilities of the optical path conversion assembly for the +1-order diffracted light and the 0-order diffracted light, the 0-order diffracted light is partially or completely deviated from the output port, and a loss of the 0-order diffracted light is generated further implemented.

With reference to the first aspect or the second aspect, in another optional implementation, when a diffraction angle of the +1-order diffracted light on the LCoS assembly is equal to a first diffraction angle, a coupling loss of the +1-order diffracted light is the lowest in a process from being emitted from the LCoS assembly to being output by the output port in a collimated manner; and a diffraction angle of the 0-order diffracted light on the LCoS is less than the first diffraction angle, and a diffraction angle of the +1-order diffracted light on the LCoS assembly is greater than or equal to the first diffraction angle; or a diffraction angle of the 0-order diffracted light on the LCoS assembly is greater than the first diffraction angle, and a diffraction angle of the +1-order diffracted light on the LCoS assembly is less than or equal to the first diffraction angle. By distributing the 0-order diffracted light and the +1-order diffracted light on two sides of the first diffraction angle, an adjustable attenuation range of power of the optical processing apparatus can be increased, and a distance from diffracted light of another diffraction order to the +1-order diffracted light can be increased. Further, crosstalk to the +1-order diffracted light is reduced.

With reference to the first aspect or the second aspect, in another optional implementation, an incidence angle of the second light beam on the LCoS assembly is greater than zero.

According to a third aspect, an embodiment of this application provides an optical system. The optical system may process an input first light beam in frequency domain, and output a light beam obtained through processing. The optical system includes an optical processing apparatus, and the optical processing apparatus may be the optical processing apparatus in any one of the first aspect or the optional implementations of the first aspect, or may be the optical processing apparatus in any one of the second aspect or the optional implementations of the second aspect.

### BRIEF DESCRIPTION OF DRAWINGS

To describe technical solutions in embodiments of this application more clearly, the following briefly describes the accompanying drawings used in the embodiments. It is clear that the accompanying drawings in the following descriptions show merely some embodiments of this application, and a person of ordinary skill in the art may still derive other drawings from these accompanying drawings without creative efforts.
FIG. 1a is a schematic diagram of an LCoS panel according to an embodiment of this application;
FIG. 1b is a schematic diagram of an LCoS-based optical frequency domain processor according to an embodiment of this application;
FIG. 2 is a schematic diagram of a 4f optical system according to an embodiment of this application;
FIG. 3a is a schematic diagram of a 4f optical system in a wavelength direction according to an embodiment of this application;
FIG. 3b is a schematic diagram of a 4f optical system in a port direction according to an embodiment of this application;
FIG. 4 is a schematic diagram of an angle matching manner according to an embodiment of this application;
FIG. 5 is a schematic diagram of a displacement matching manner according to an embodiment of this application;
FIG. 6 is a schematic diagram of an apparatus for a displacement matching manner according to an embodiment of this application;
FIG. 7 is a schematic diagram of another 4f optical system in a port direction according to an embodiment of this application;
FIG. 8 is a schematic diagram of a principle of coupling between diffracted light and an output port in a case of small attenuation according to an embodiment of this application;
FIG. 9 is a schematic diagram of a principle of coupling between diffracted light and an output port in a case of large attenuation according to an embodiment of this application;
FIG. 10 is a schematic diagram of impact of crosstalk light on power stability of an optical frequency domain processor according to an embodiment of this application;
FIG. 11 is a schematic diagram of impact of crosstalk light on an adjustable attenuation range of an optical frequency domain processor according to an embodiment of this application;
FIG. 12 is a schematic diagram of a structure of an optical processing apparatus according to an embodiment of this application;
FIG. 13a is a schematic diagram of suppression of crosstalk light by an asymmetric spherical aberration deflection component according to an embodiment of this application;
FIG. 13b is a schematic diagram of suppression of crosstalk light by an asymmetric spherical aberration deflection component according to an embodiment of this application;
FIG. 13c is a schematic diagram of suppression of crosstalk light by an asymmetric spherical aberration deflection component according to an embodiment of this application;
FIG. 14 is a schematic diagram of suppression of crosstalk light by an asymmetric spherical aberration deflection component according to an embodiment of this application;
FIG. 15 is a schematic diagram of suppression of crosstalk light by a deflection component with an asymmetric deflection effect according to an embodiment of this application;
FIG. 16 is a schematic diagram of suppression of crosstalk light by a first suppression element according to an embodiment of this application;
FIG. 17 is a schematic diagram of an adjustable attenuation range of an optical processing apparatus according to an embodiment of this application;
FIG. 18 is a schematic diagram of a structure of another optical processing apparatus according to an embodiment of this application; and
FIG. 19(a) and FIG. 19(b) are a schematic diagram of a structure of another optical processing apparatus according to an embodiment of this application.

### DESCRIPTION OF EMBODIMENTS

The following clearly and completely describes technical solutions in embodiments of this application with reference to the accompanying drawings.

First, it should be noted that, in this embodiment of this application, a diffraction angle of light is an angle between a moving direction and a normal of diffracted light, and an incidence angle is an angle between a moving direction and a normal of incident light.

Before an optical signal processing apparatus provided in an embodiment of this application is described, an LCoS and an LCoS-based optical frequency domain processor are first described.

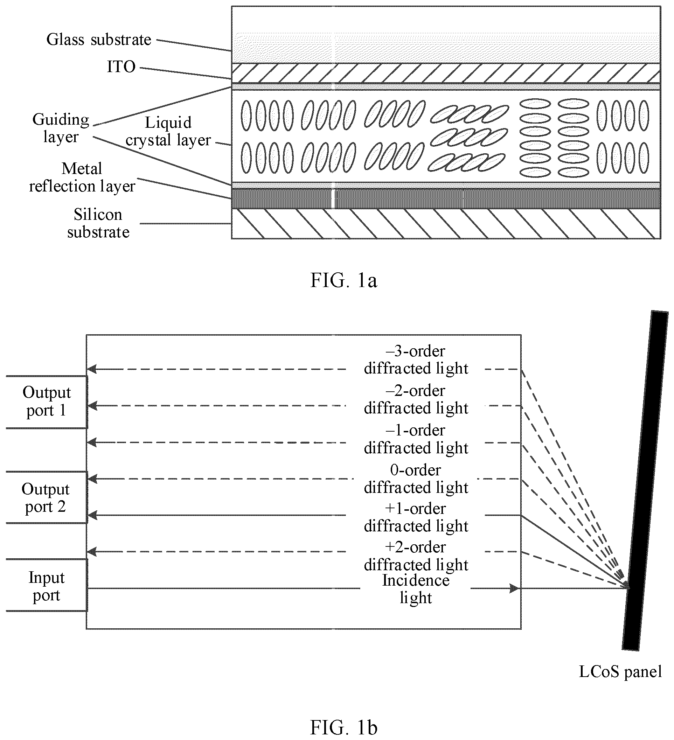

The LCoS modulates incident light by applying different voltages to a liquid crystal layer. FIG. 1a is a schematic diagram of an LCoS panel according to an embodiment of this application. Specifically, FIG. 1a may be used as an example for description. As shown in FIG. 1a, the LCoS panel may include a glass substrate, an ITO (indium tin oxide, indium tin oxide), two guiding layers, a liquid crystal layer, a guiding layer, a metal reflection layer, and a silicon substrate. A drive circuit may be deployed in the silicon substrate. The drive circuit may apply a voltage to the ITO and the metal reflection layer based on settings, so that liquid crystal molecules in the liquid crystal layer are rearranged under an action of the voltage. The guiding layer may ensure that the liquid crystal molecules are arranged in order under the action of the voltage. A refractive index of light of a position of the liquid crystal molecules is changed by rearrangement of the liquid crystal molecules, and an optical path difference is changed by changing the refractive index, so that phase modulation of light is implemented. Based on the foregoing principle, different voltages may be applied to liquid crystals at different positions on the LCoS panel, so that an effect of modulating light by the LCoS panel is similar to an effect of modulating light by a blazed grating. It should be noted that the structure of the LCoS panel shown in FIG. 1a is merely an example of an LCoS panel, and an LCoS panel of another structure may also be used in this embodiment of the present invention.

In a process in which the LCoS panel modulates light, a minimum granularity of voltage control may be used as a pixel. To be specific, on the LCoS panel, liquid crystal molecules in a same pixel are controlled by a same voltage, and in this case, an effect of modulating light in the same pixel is the same. Therefore, in an actual modulation process, a phase mode loaded by the LCoS is not a standard blazed grating mode. In addition, because the LCoS panel has an edge field effect, when a difference between phases loaded on adjacent pixels on the LCoS panel is very large (for example, phases loaded on two adjacent pixels are 2π and 0), a steepness of a phase mode actually generated by the two adjacent pixels is not as good as that of an ideal blazed grating. Due to the foregoing two factors, diffracted light passing through the LCoS panel includes a plurality of diffraction orders. In addition to needed +1-order diffracted light, diffracted light of another diffraction order, such as 0-order diffracted light, may be coupled to the output port, and crosstalk is caused to the system.

Refer to FIG. 1b. FIG. 1b is a schematic diagram of an LCoS-based optical frequency domain processor according to an embodiment of this application. As shown in FIG. 1b, incident light input from an input port may be incident to an LCoS panel after a series of optical processing, such as deflection processing and demultiplexing and multiplexing processing, in a black solid block. Corresponding pixels on the LCoS diffract, according to a corresponding configuration, the needed +1-order diffracted light to an output port 2 at a specific diffraction angle, and output power of the +1-order diffracted light is adjusted by using a matching degree between the +1-order diffracted light and the output port 2.

However, some energy of diffracted light of another order, for example, 0-order diffracted light, generated through diffraction of the LCoS may also enter the output port 2. After a position of each assembly in the optical frequency domain processor and an incidence angle of the incident light are determined, a diffraction angle of the 0-order diffracted light is fixed, and output power of the 0-order diffracted light cannot be adjusted. Therefore, the 0-order diffracted light is crosstalk light for the needed +1-order diffracted light. In addition, diffracted light of another order may also enter another output port. As shown in FIG. 1b, -2-order diffracted light may enter an output port 1, causing interference to an optical signal that needs to be output by the output port 1.

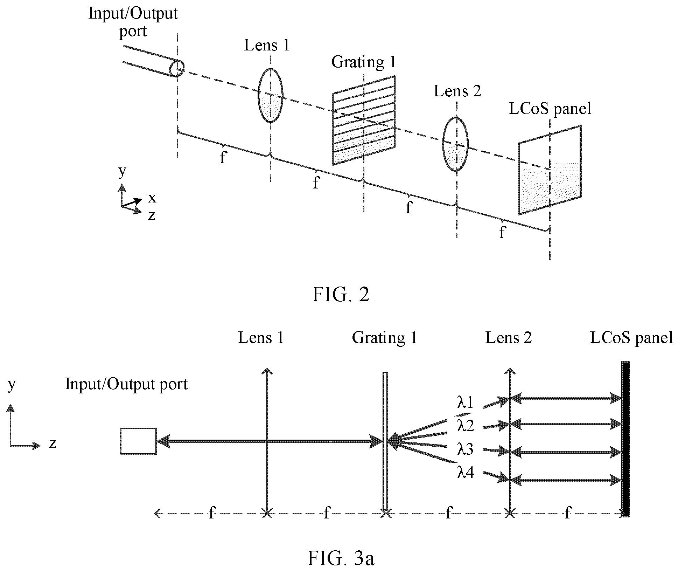

The LCoS-based optical frequency domain processor usually uses a 4f optical system. For example, FIG. 2 is a schematic diagram of a 4f optical system according to an embodiment of this application. As shown in FIG. 2, the 4f optical system includes two lenses (a lens 1 and a lens 2) whose focal lengths are both f, a transmission grating (a grating 1), an input/output port, and an LCoS panel. A distance between the lens 1 and the lens 2 is 2f, the grating 1 is disposed at a midpoint between the lens 1 and the lens 2, the input/output port is disposed at a position that is on a side, away from the grating 1, of the lens 1 and that is f away from the lens 1, and the LCoS is disposed at a position that is on a side, away from the grating 1, of the lens 2 and that is f away from the lens 2. The input/output port may be different ports. Alternatively, the input/output port may be a same port which is used as an input port when receiving light input from the outside, and is used as an output port when outputting light to the outside.

In the 4f optical system shown in FIG. 2, after incident light is input from the input port, an optical path may be deflected by the lens 1. Then the incident light is demultiplexed by the grating 1, and is decomposed into light of different wavelengths. After the incident light is deflected by a lens 2, the light of different wavelengths is incident to different pixels on the LCoS panel. Diffraction angles of the light of different wavelengths are adjusted by controlling phase modulation amounts of light of the different pixels on the LCoS. Diffracted light of light of different wavelengths is converged to the output port after being deflected by the lens 2, multiplexed by the grating 1, and deflected by the lens 1. Mismatch degrees between the light of different wavelengths and the output port are different, so that adjustment and control of output power of the light of different wavelengths are implemented.

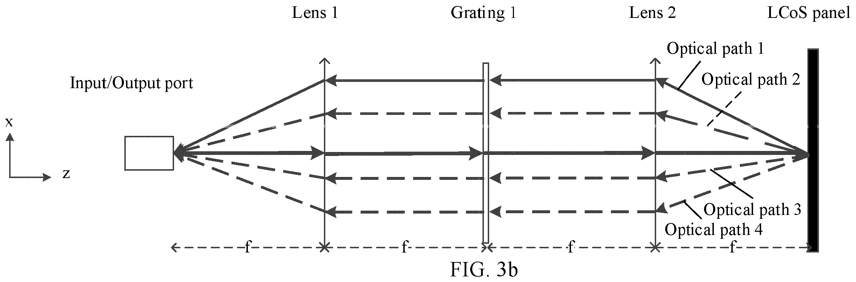

Further, refer to FIG. 3a and FIG. 3b. The 4f system in FIG. 2 may be decomposed into systems in a yz plane and an xz plane for analysis. An optical path in a wavelength direction in FIG. 2 may be analyzed on the yz plane, and an optical path in a port direction in FIG. 2 may be analyzed on the xz plane. FIG. 3a is a schematic diagram of a 4f optical system in a wavelength direction according to an embodiment of this application, and FIG. 3b is a schematic diagram of a 4f optical system in a port direction according to an embodiment of this application. In FIG. 3a and FIG. 3b, a black solid line arrow represents light in the 4f system. It is easy to learn in FIG. 3a and FIG. 3b that, after the light is incident from an input/output port, the light is expanded into light of different wavelengths in a wavelength direction (where λ1, λ2, λ3, and λ4 in the figure represent the light of different wavelengths). In a port direction, light of a single wavelength may be diffracted from an LCoS panel at a specific diffraction angle. FIG. 3b shows diffraction optical paths of light of a single wavelength at different diffraction angles. Light of a wavelength λ1 is used as an example. After being diffracted by the LCoS panel, the light of the wavelength λ1 may be diffracted along an optical path 1 in FIG. 3b. By adjusting the diffraction angle, the light of the wavelength λ1 may also be diffracted along an optical path 2, an optical path 3, or an optical path 4 in FIG. 3b after being diffracted by the LCoS panel.

It should be understood that, in the port direction, the light of different wavelengths may have different diffraction angles, or may have a same diffraction angle. If the light of different wavelengths is emitted from the LCoS panel at different diffraction angles, diffracted light of different wavelengths has different incidence angles after arriving at the output port, so that matching degrees between diffracted light of different wavelengths and the output port are different. Diffracted light with a lower matching degree has smaller output power.

It should be noted that, for ease of understanding, the LCoS optical frequency domain processor based on the 4f system shown in FIG. 2, FIG. 3a, and FIG. 3b is an example of a structure of an optical frequency domain processor. The LCoS optical frequency domain processor used in this embodiment of this application may alternatively be a frequency domain processor of another construction based on the 4f system. For example, to reduce costs and reduce a size of the apparatus, an optical path may be folded or an assembly may be reused. For example, the optical path is folded by replacing the grating 1 with a reflection grating, or the lens 1 and the lens 2 may be reused. Examples are not exhaustive herein.

After the diffracted light is transmitted from the LCoS panel to the output port, the diffracted light matches the output port in different manners, for example, in an angle matching manner or in a displacement matching manner. It is easy to understand that the output port is a port having a specific cross section, and the diffracted light transmitted to the output port is a light beam having a specific cross section. Herein, for ease of understanding the angle matching manner and the displacement matching manner, it may be assumed that the output port is a cylindrical port having a circular cross section, and the diffracted light is a cylindrical light beam having a circular cross section.

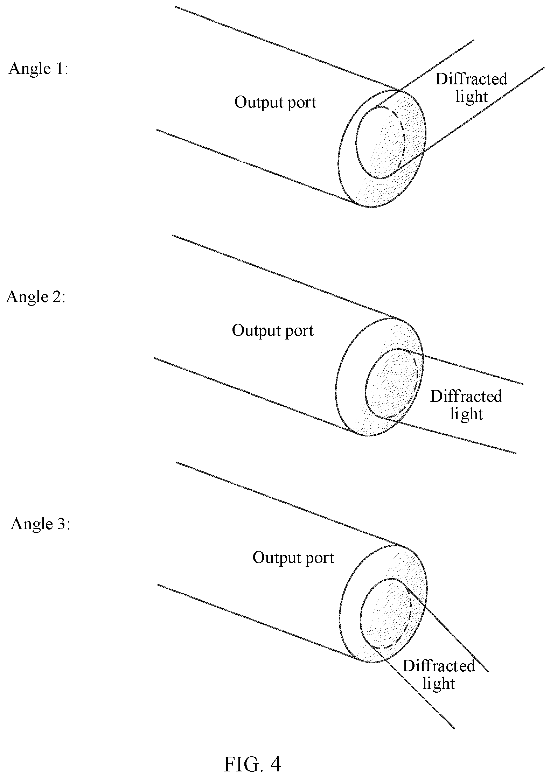

First, the angle matching manner is described. For details, refer to FIG. 4. FIG. 4 is a schematic diagram of an angle matching manner according to an embodiment of this application. As shown in FIG. 4, in the angle matching manner, when diffracted light is transmitted to an output port, the diffracted light may be completely projected into the output port, but projection angles of the diffracted light may be different. FIG. 4 is a schematic diagram in which diffracted light is projected into an output port at three angles. It is easy to learn that diffracted light at an angle 1, at an angle 2, and at an angle 3 may be completely projected into the output port, but diffracted light at the angle 1 and at the angle 3 each has a large included angle with the output port, so that a large loss occurs after the diffracted light is projected into the output port. Therefore, optical power attenuation is controlled by controlling the included angle between the diffracted light and the output port.

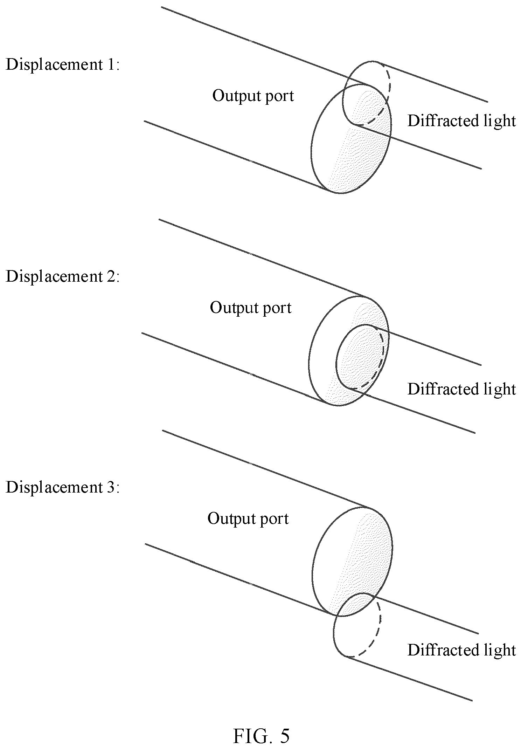

The displacement matching manner is described below. For details, refer to FIG. 5. FIG. 5 is a schematic diagram of a displacement matching manner according to an embodiment of this application. As shown in FIG. 5, in the displacement matching manner, when diffracted light is transmitted to an output port, an included angle between the diffracted light and the output port remains unchanged, but an axis of the diffracted light and the axis of the output port may have deviations of different displacements. FIG. 5 is a schematic diagram in which diffracted light is projected into an output port in three displacements of axises. It is easy to learn that diffracted light corresponding to a displacement 1, a displacement 2, and a displacement 3 may have axises parallel to the axis of the output port, but axises of diffracted light corresponding to the displacement 1 and the displacement 2 have deviations of large displacements from the axis of the output port, so that a part of the diffracted light cannot be projected into the output port, causing a large loss. Therefore, optical power attenuation is controlled by controlling the deviation displacements between axises of the diffracted light and the output port.

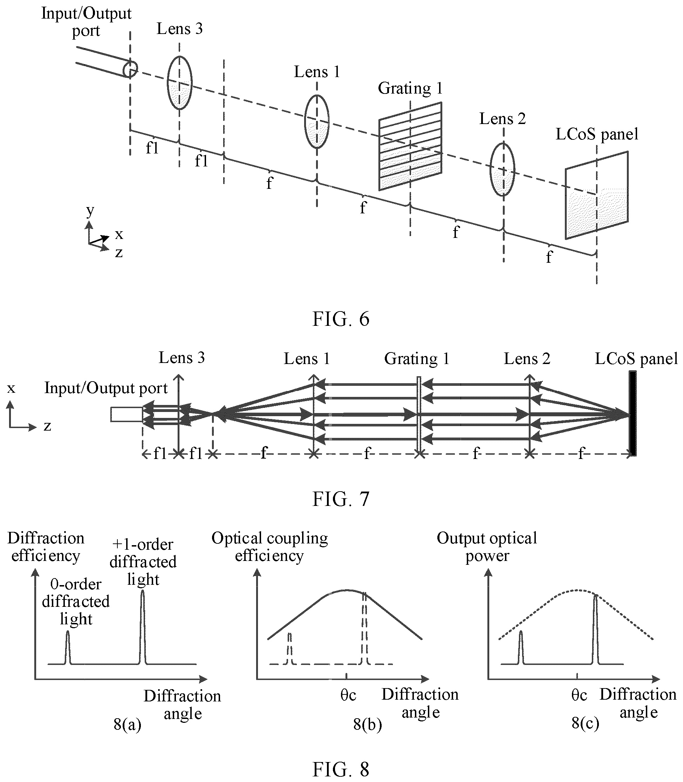

In a specific implementation, the angle matching manner may be implemented by disposing the output port at a position that is on a side, away from the grating 1, of the lens 1 and that is f away from the lens 1 in the 4f system as shown in FIG. 2. It can be learned from FIG. 3b that, after diffracted light with different diffraction angles is transmitted to the output port, included angles between the diffracted light and the output port may be different, so that optical power is adjusted in the angle matching manner. The displacement matching manner may be implemented by using a 4f system shown in FIG. 6. FIG. 6 is a schematic diagram of an apparatus for the displacement matching manner according to an embodiment of this application. As shown in FIG. 6, a lens 3 whose focal length is f1 may be added to the 4f system shown in FIG. 2. The lens 3 is disposed at a position that is on a side, away from the grating 1, of the lens 1 and that is f+f1 away from the lens 1. The input/output port is disposed at a position that is on a side, away from the lens 1, of the lens 3 and that is f1 away from the lens 3. Further refer to FIG. 7. FIG. 7 is a schematic diagram of another 4f optical system in a port direction according to an embodiment of this application. FIG. 7 shows an optical path of the system in FIG. 6 in the port direction. It is easy to learn that after diffracted light passes through the 4f system, diffracted light at different diffraction angles may be deflected by the lens 3 to have deviations of different displacements from an axis of an input/output port, so that optical power is adjusted in the displacement matching manner.

It should be understood that the foregoing angle matching manner or displacement matching manner is intended to adjust power intensity of +1-order diffracted light generated by the LCoS panel, and control an angle matching degree and a displacement matching degree between the +1-order diffracted light and the output port. However, when the LCoS panel diffracts light, diffracted light of another diffractive order such as 0-order diffracted light is further generated. On the LCoS panel, a diffraction angle of the 0-order diffracted light is equal to an incidence angle. Therefore, when the incidence angle is fixed, the diffraction angle of the 0-order diffracted light remains unchanged, and a diffraction angle of the + 1-order diffracted light is adjustable.

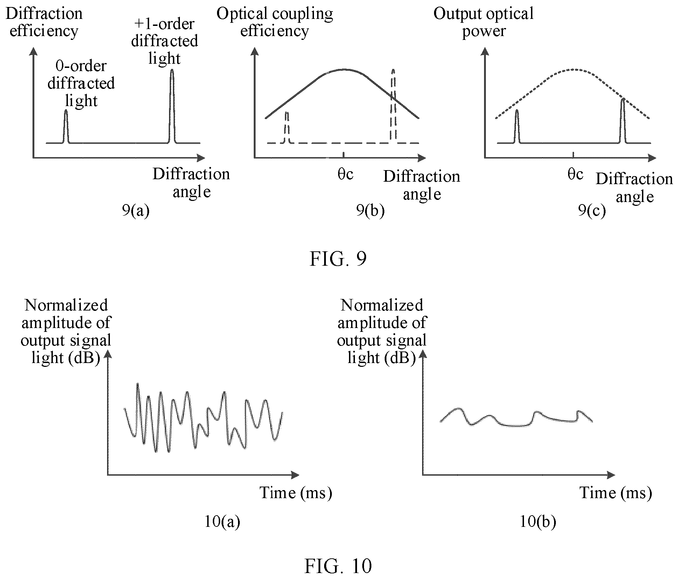

It is easy to understand that, when positions of assemblies in the LCoS-based optical frequency domain processor are fixed, an optimal diffraction angle that enables highest coupling efficiency and lowest coupling loss of light in a process in which light is transmitted from the LCoS panel to the output port may be determined. That is, if the light is emitted from the LCoS panel at the optimal diffraction angle, power of the light finally transmitted to the output port is the largest. For example, in the angle matching manner, if light is diffracted from the LCoS at the optimal diffraction angle, when the diffracted light finally arrives at the output port, an included angle between the diffracted light and the output port is the smallest, so that the loss of the diffracted light is the lowest. For another example, in the displacement matching manner, if the light is diffracted from the LCoS at the optimal diffraction angle, when the diffracted light finally arrives at the output port, a displacement of the deviation between the axis of the diffracted light and the axis of the output port is the smallest, so that the coupling loss of the diffracted light is the lowest. If a diffraction angle of light emitted from the LCoS panel is greater than the optimal diffraction angle or less than the optimal diffraction angle, the power of the light finally transmitted to the output port is attenuated, and the coupling loss of the light is increased. Refer to FIG. 8 and FIG. 9. Impact of different diffraction angles on output optical power is further described.

FIG. 8 is a schematic diagram of a principle of coupling between diffracted light and an output port in a case of small attenuation according to an embodiment of this application. FIG. 9 is a schematic diagram of a principle of coupling between diffracted light and an output port in a case of large attenuation according to an embodiment of this application. Diffraction efficiency shown in 8(a) in FIG. 8 and 9(a) in FIG. 9 may be a ratio of intensity of light diffracted from an LCoS to intensity of light incident to the LCoS. It is easy to understand that +1-order diffracted light concentrates most energy of the diffracted light, and diffraction efficiency of the +1-order diffracted light is higher than diffraction efficiency of 0-order diffracted light. A diffraction angle of the 0-order diffracted light is equal to an incidence angle of the light on the LCoS. Because the incidence angle of the light on the LCoS remains unchanged, the diffraction angle of the 0-order diffracted light is unadjustable (where a diffraction angle of the 0-order diffracted light in FIG. 8 is the same as a diffraction angle of the 0-order diffracted light in FIG. 9). A diffraction angle of the +1-order diffracted light is related to factors such as an incidence angle of the light on the LCoS, whether the incident light on the LCoS and a diffraction angle of the +1-order diffracted light are on a same side of a normal of the LCoS, and a wavelength of the light. Therefore, the diffraction angle of the +1-order diffracted light is adjustable, but adjustment of the diffraction angle of the +1-order diffracted light does not affect diffraction efficiency of the +1-order diffracted light (where a diffraction angle of the +1-order diffracted light in FIG. 8 is less than a diffraction angle of the +1-order diffracted light in FIG. 9, and diffraction efficiency of the +1-order diffracted light in FIG. 8 and FIG. 9 remains unchanged).

Further refer to FIG. 8 and FIG. 9, θc in 8(b) in FIG. 8 and 9(b) in FIG. 9 is an optimal diffraction angle. A change of optical coupling efficiency with the diffraction angle may be represented by a solid line in a coordinate system in 8(b) in FIG. 8 or 9(b) in FIG. 9. Optical coupling efficiency corresponding to the optimal diffraction angle is the highest, and within a specific range, the larger a deviation from the optimal diffraction angle, the lower the optical coupling efficiency (where when the deviation exceeds the specific range, the optical coupling efficiency may be 0). The diffraction angle of the +1-order diffracted light in 8(b) in FIG. 8 is closer to the optimal diffraction angle θc compared with the diffraction angle of the +1-order diffracted light in 9(b) in FIG. 9. Therefore, correspondingly, output optical power (which may be represented by a wave peak on the right side of a solid line in the coordinate system in 8(c)) of the +1-order diffracted light in 8(c) in the case of small attenuation shown in FIG. 8 is higher than output optical power (which may be represented by a wave peak on the right side of a solid line in the coordinate system in 9(c)) of the +1-order diffracted light in 9(c) in the case of large attenuation shown in FIG. 9.

It may be understood that, the +1-order diffracted light is used as required signal light. In a case of large attenuation, output optical power of the +1-order diffracted light is small; and in a case of small attenuation, output optical power of the +1-order diffracted light is large. The 0-order diffracted light is used as crosstalk light. In cases of both large attenuation and small attenuation, the 0-order diffracted light is equivalent to background noise introduced in an optical frequency domain processor, and reduces purity of the output light. In addition, the 0-order diffracted light is sensitive to a system parameter, and has poor power stability. This causes a large power jitter of the output light, and reduces stability of output optical power of the optical frequency domain processor. Especially in a case of large attenuation, because power of the output +1-order diffracted light is small, 0-order diffracted light occupies a large proportion of the entire output light, so that the output optical power jitter of the optical frequency domain processor is more obvious. Specifically, FIG. 10 may be used as an example. FIG. 10 is a schematic diagram of impact of crosstalk light on power stability of an optical frequency domain processor according to an embodiment of this application. In FIG. 10, 10(a) shows that when the crosstalk light is large, output optical power jitter amplitude of the optical frequency domain processor is large, and 10(b) shows that when the crosstalk light is small, output optical power jitter amplitude of the optical frequency domain processor is small.

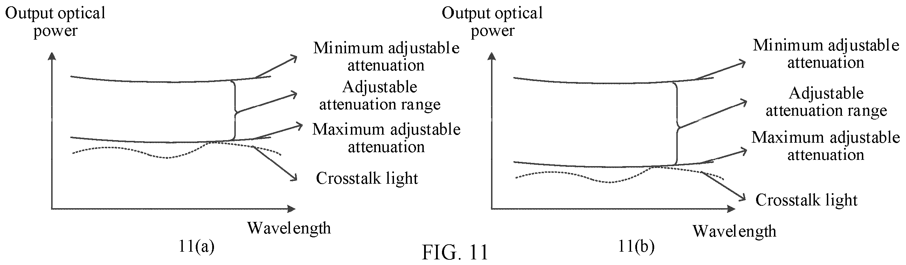

In addition, because total power of light diffracted from the LCoS is constant, when input optical power is fixed, maximum optical power that can be output by the optical frequency domain processor is determined. However, minimum optical power that can be output by the optical frequency domain processor is related to crosstalk light such as the 0-order diffracted light. Because optical power of the 0-order diffracted light is not adjustable, if the optical power of the 0-order diffracted light is excessively large, the minimum optical power that can be output by the frequency domain processor is excessively large, so that an adjustable attenuation range of the optical power output by the optical frequency domain processor is reduced. Specifically, FIG. 11 may be used as an example. FIG. 11 is a schematic diagram of impact of crosstalk light on an adjustable attenuation range of an optical frequency domain processor according to an embodiment of this application. In FIG. 11, 11(a) shows that when the crosstalk light is large, the adjustable attenuation range of the optical frequency domain processor is small, and 11(b) shows that when the crosstalk light is small, the adjustable attenuation range of the optical frequency domain processor is large.

Based on the foregoing analysis, it may be understood that excessively large crosstalk light such as the 0-order diffracted light not only causes instability of the output optical power of the optical frequency domain processor, but also reduces the adjustable attenuation range of the optical frequency domain processor.

An embodiment of this application provides an optical processing apparatus. The optical processing apparatus may be an optical frequency domain processor, or may be a part of an optical frequency domain processor, and can suppress crosstalk light such as 0-order diffracted light, to improve stability of output optical power of the optical frequency domain processor and increase an adjustable attenuation range of the optical frequency domain processor.

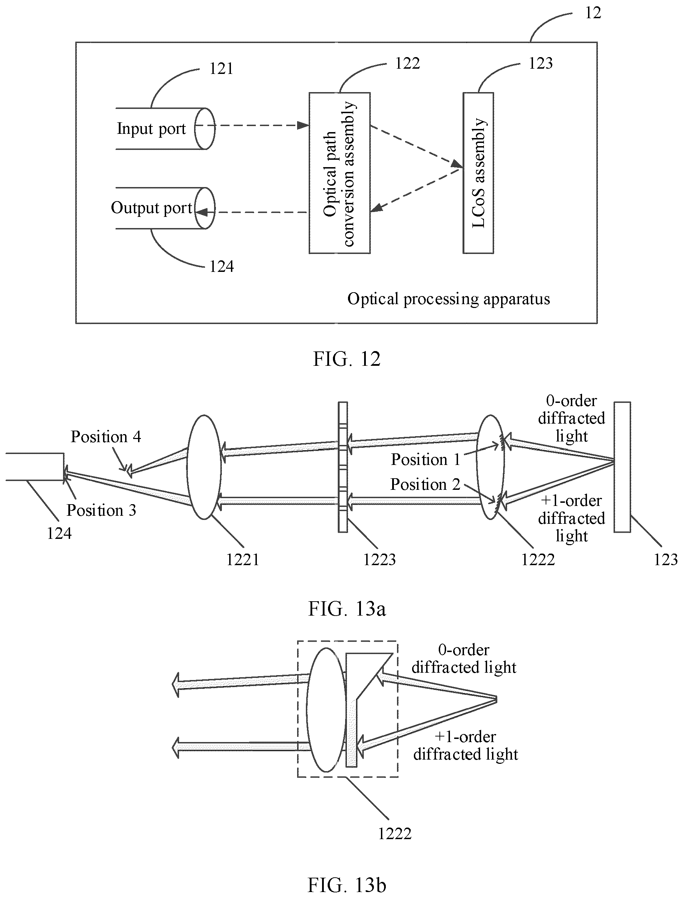

The optical processing apparatus provided in this embodiment of this application is described in detail below with reference to FIG. 12 to FIG. 19(b). First, refer to FIG. 12. FIG. 12 is a schematic diagram of a structure of an optical processing apparatus according to an embodiment of this application. As shown in FIG. 12, the optical processing apparatus 12 includes an input port 121, an optical path conversion assembly 122, an LCoS assembly 123, and an output port 124.

The input port 121 is configured to receive a first light beam. The optical path conversion assembly 122 is configured to disperse the first light beam to obtain a second light beam, where the second light beam is a single-wavelength light beam. The LCoS assembly 123 is configured to diffract the second light beam to obtain diffracted light of the second light beam, where the LCoS assembly includes a plurality of pixels, light beams received by the plurality of pixels correspond to different diffraction angles, the diffraction angles are used to control an attenuation degree of the light beams received by the pixels in the optical processing apparatus, and the diffracted light of the second light beam includes 0-order diffracted light and +1-order diffracted light. The optical path conversion assembly 122 is further configured to: transmit the diffracted light of the second light beam, and converge the +1-order diffracted light to the output port, where a deflection capability of the optical path conversion assembly 122 for the 0-order diffracted light is different from a deflection capability for the +1-order diffracted light. The output port 124 is configured to output the received +1-order diffracted light in a collimated manner.

In the optical processing apparatus 12 provided in this embodiment of this application, after the input first light beam is decomposed into the single-wavelength second light beam, the LCoS assembly 123 diffracts the second light beam to obtain diffracted light of a plurality of diffractive orders of the second light beam. Then the diffracted light of the second light beam is transmitted by using the optical path conversion assembly 122, the +1-order diffracted light that is used as the signal light is transmitted to the output, and the +1-order diffracted light that is converged to the output port 124 is output by the output port 124 in a collimated manner. In a process in which the optical path conversion assembly 122 transmits the diffracted light, when the optical path conversion assembly 122 can converge the +1-order diffracted light to the output port 124, due to different deflection capabilities of the optical path conversion assembly 122 for the 0-order diffracted light and the +1-order diffracted light, the 0-order diffracted light is partially or completely deviated from the output port 124, and a loss of the 0-order diffracted light is generated. In this way, the loss of the 0-order diffracted light relieves problems, caused by crosstalk light, of poor stability of the optical frequency domain processor and a small adjustable attenuation range of the optical frequency domain processor.

Alternatively, in the optical processing apparatus 12, the input port 121 is configured to receive a first light beam. The optical path conversion assembly 122 is configured to disperse the first light beam to obtain a second light beam, where the second light beam is a single-wavelength light beam. The LCoS assembly 123 is configured to diffract the second light beam to obtain diffracted light of the second light beam, where the LCoS assembly includes a plurality of pixels, light beams received by the plurality of pixels correspond to different diffraction angles, the diffraction angles are used to control an attenuation degree of the light beams received by the pixels in the optical processing apparatus, and the diffracted light of the second light beam includes 0-order diffracted light and +1-order diffracted light. The optical path conversion assembly 122 is further configured to: transmit the diffracted light of the second light beam, and converge the +1-order diffracted light to the output port, where a transmittance capability of the optical path conversion assembly 122 for the +1-order diffracted light is higher than a transmittance capability for the 0-order diffracted light. The output port 124 is configured to output the received +1-order diffracted light in a collimated manner.

In the optical processing apparatus 12 provided in this embodiment of this application, after the input first light beam is decomposed into the single-wavelength second light beam, the LCoS assembly 123 diffracts the second light beam to obtain diffracted light of a plurality of diffractive orders of the second light beam. Then the diffracted light of the second light beam is transmitted by using the optical path conversion assembly 122, the +1-order diffracted light that is used as the signal light is transmitted to the output, and the +1-order diffracted light that is converged to the output port 124 is output by the output port 124 in a collimated manner. A transmittance capability of the optical path conversion assembly for the +1-order diffracted light is higher than a transmittance capability for the 0-order diffracted light, so that the 0-order diffracted light is suppressed in a process of being transmitted to the output port, and a loss of the 0-order diffracted light is generated. In this way, the loss of the 0-order diffracted light relieves problems, caused by crosstalk light, of poor stability of the optical frequency domain processor and a small adjustable attenuation range of the optical frequency domain processor.

The following describes optional implementations of concepts or assemblies in the optical processing apparatus 12 shown in FIG. 12. It should be noted that the following related descriptions may be corresponding to the optical processing apparatus 12 that is applicable to any one of the foregoing functions.

The first light beam may be a single-wavelength light beam, or may be a multi-wavelength light beam. If the first light beam is a single-wavelength light beam, after the optical path conversion assembly 122 disperses the first light beam, a second light beam is obtained; if the first light beam is a multi-wavelength light beam, after the optical path conversion assembly 122 disperses the first light beam, a plurality of single-wavelength light beams with different wavelengths may be obtained, and any single-wavelength light beam may be used as a second light beam. In this way, crosstalk, such as the 0-order diffracted light, on the optical processing apparatus 12 in this embodiment of this application can be reduced. After the first light beam is dispersed into a plurality of single-wavelength light beams with different wavelengths, frequencies of the single-wavelength light beams are different, so that the first light beam is decomposed in frequency domain, and processing of the single-wavelength light beam implements processing of the first light beam in frequency domain.

Optionally, the input port 121 may include an optical fiber collimator, which may change a diverged light beam into a collimated light beam. Optionally, the output port 124 may include an optical fiber collimator. Further, optionally, the input port 121 and the output port 124 may share a same optical fiber collimator. An optical circulator inputs, in a collimated manner, a light beam input from the input port 121 into the optical processing apparatus 12, and outputs, in a collimated manner, a light beam received from the optical processing apparatus 12 to outside of the optical processing apparatus 12. Further, optionally, the input port 121 and the output port 124 may share a same port. When the received light beam is input into the optical processing apparatus 12 in a collimated manner, the port is used as the input port 121. When the received light beam is output from the optical processing apparatus 12 in a collimated manner, the port is used as the output port 124.

According to the invention, the optical path conversion assembly 122 includes a first deflection component 1221, a second deflection component 1222, and a demultiplexing/multiplexing component 1223. The demultiplexing/multiplexing component 1223 is configured to disperse the first light beam passing through the first deflection component 1221 to obtain the second light beam; and the second deflection component 1222 is configured for incidence of the second light beam into the LCoS assembly.

Further, optionally, the first deflection component 1221 may include one convex lens or a combination of a plurality of convex lenses, and the first deflection component 1221 may further include one concave reflector or a combination of a plurality of concave reflectors. Optionally, the second deflection component 1222 may include one convex lens or a combination of a plurality of convex lenses, and the second deflection component 1222 may further include one concave reflector or a combination of a plurality of concave reflectors. Optionally, the demultiplexing/multiplexing component 1223 may be a grating.

Specifically, the first deflection component 1221, the second deflection component 1222, and the demultiplexing/multiplexing component 1223 in the optical path conversion assembly 122 may have a plurality of alternative implementations to implement the loss of crosstalk light such as 0-order diffracted light. The following describes five alternative implementations as examples. For the first or the second alternative implementation, two optional implementations are further described as examples.

That deflection capabilities for a light beam are different may include that deflection effects are different and/or that deflection intensities are different. The deflection effect includes a convergence effect and a divergence effect. Therefore, in the first to third alternative implementations, the optical path deflection assembly may have different implementations based on different deflection capabilities.

In the first alternative implementation, after being diffracted from the LCoS assembly 123, the 0-order diffracted light is illuminated at a first position on the second deflection component 1222. After being diffracted from the LCoS assembly 123, the +1-order diffracted light is illuminated at a second position on the second deflection component 1222. The first position and the second position on the second deflection component 1222 have different deflection capabilities for a same light beam.

In a second alternative implementation, an illumination position of the 0-order diffracted light on the first deflection component 1221 is a third position, and an illumination position of the +1-order diffracted light on the first deflection component 1221 is a fourth position. The third position and the fourth position on the first deflection component 1221 have different deflection capabilities for a same light beam.

In the first and second alternative implementations, different deflection capabilities for the same light beam at different positions on the first deflection component 1221 or the second deflection component 1222 may alternatively be implemented in different optional manners.

In a first optional manner, deflection effects of the first deflection component 1221 and/or the second deflection component 1222 on the +1-order diffracted light and the 0-order diffracted light are convergence effects, and a convergence capability for the +1-order diffracted light is different from a deflection intensity on the 0-order diffracted light (where in a case in which the deflection effect on the light beam is the convergence effect, the deflection intensity is also convergence intensity). The second deflection component 1222 is used as an example. The second deflection component 1222 is a convex lens, and curvature radii (or spherical aberrations) of a first position and a second position are different, so that different deflection intensities on the +1-order diffracted light and the 0-order diffracted light may be implemented. Specifically, the curvature radius of the first position may be greater than the curvature radius of the second position, or the curvature radius of the first position may be less than the curvature radius of the second position. For another example, the second deflection component 1222 is a lens with a uniform curvature radius, and an assembly having a specific deflection capability for the light beam may be disposed in front of the first position or in front of the second position (or behind the first position or behind the second position, where "in front of" and "behind" herein may be understood based on a transmission direction of the light beam, a position at which the light beam arrives first is "front", and a position at which the light beam arrives later is "behind"), so that the lens has different deflection intensities on the +1-order diffracted light and the 0-order diffracted light. In this way, the +1-order diffracted light may be converged to the output port 124, and a part or all of the 0-order diffracted light is deviated from the output port 124; or the like.

FIG. 13a to FIG. 14 are schematic diagrams of suppression of crosstalk light by asymmetric spherical aberration deflection components according to embodiments of this application. Specifically, FIG. 13a to FIG. 14 may be used as examples for description. To simplify views, the input port 121 and an optical path in which a light beam is transmitted from the input port 121 to the LCoS assembly 123 are omitted in FIG. 13a to FIG. 14, and only an optical path in which a light beam is transmitted from the LCoS assembly 123 to the output port 124 is shown.

As shown in FIG. 13a, an illumination position of the 0-order diffracted light diffracted by the LCoS assembly 123 on the second deflection component 1222 is a position 1, an illumination position of the +1-order diffracted light diffracted by the LCoS assembly 123 on the second deflection component 1222 is a position 2, and a curvature radius of the position 1 on the second deflection component 1222 is greater than a curvature radius of the position 2. Therefore, the deflection intensity of the second deflection component 1222 on the 0-order diffracted light is greater than the deflection intensity on the +1-order diffracted light, so that the +1-order diffracted light may converge at a position 3 of the output port 124, and the 0-order diffracted light may converge at a position 4 between the output port 124 and the first deflection component 1221. Because energy of the light beam at a convergence position after passing through the lens is the most concentrated, and after passing through the convergence position, the light beam starts to diverge again, the +1-order diffracted light converges at the position 3 of the output port 124, which facilitates output of the light beam. After converging at the position 4, the 0-order diffracted light continues to diverge in a process of transmitting forward. When the 0-order diffracted light is transmitted forward to a plane where an end surface of the output port 124 is located, a possible case is that the 0-order diffracted light is completely staggered with the output port 124, and is no longer output from the output port, so that crosstalk on the signal light is reduced; and another possible case is that, after the 0-order diffracted light is diverged, only a part of the light beam may be emitted into the output port 124, and a remaining part of the light beam cannot be emitted into the output port 124, so that a crosstalk degree on the signal light is reduced.

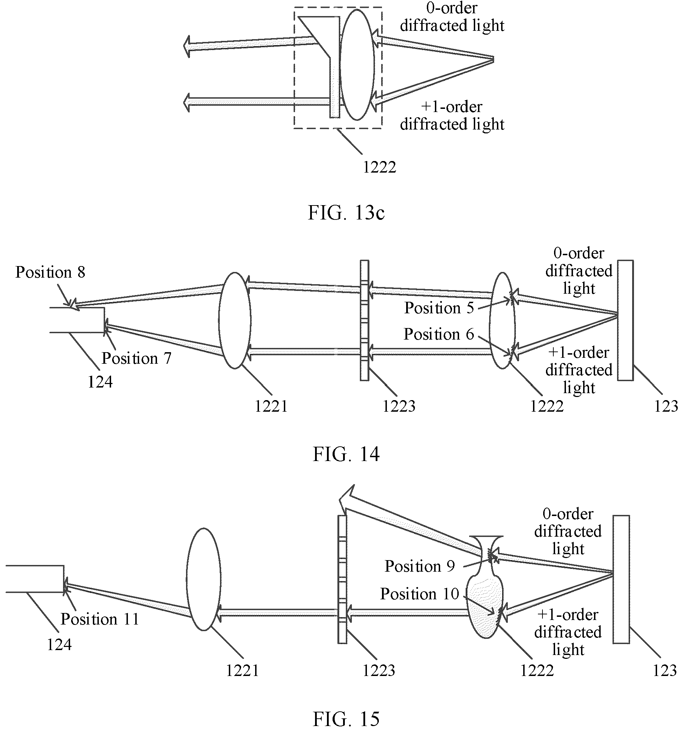

It should be understood that the second deflection component 1222 in FIG. 13a may be replaced by a lens with a uniform curvature radius and a transparent glass sheet with an unequal thickness in FIG. 13b or FIG. 13c, so that deflection intensity on the 0-order diffracted light can also be greater than deflection intensity on the +1-order diffracted light. There may also be other implementations, and this is not exhaustive.

As shown in FIG. 14, an illumination position of the 0-order diffracted light diffracted by the LCoS assembly 123 on the second deflection component 1222 is a position 5, an illumination position of the diffracted +1-order diffracted light on the second deflection component 1222 is a position 6, and a curvature radius of the position 5 on the second deflection component 1222 is less than a curvature radius of the position 6. Therefore, the deflection intensity of the second deflection component 1222 on the 0-order diffracted light is less than the deflection intensity on the +1-order diffracted light, so that the +1-order diffracted light may converge at a position 7 of the output port 124, and the 0-order diffracted light may converge at a position 8 on a side that is of the output port 124 and that is away from the first deflection component 1221. The 0-order diffracted light does not converge to one point before being transmitted to a plane in which an end surface of the output port 124 is located. Therefore, when the 0-order diffracted light is transmitted forward to the plane where the end surface of the output port 124 is located, a possible case is that the 0-order diffracted light is completely staggered with the output port 124, and is no longer output from the output port, so that crosstalk on the signal light is reduced; and another possible case is that, after the 0-order diffracted light is diverged, only a part of the light beam may be emitted into the output port 124, and a remaining part of the light beam cannot be emitted into the output port 124, so that a crosstalk degree on the signal light is reduced. It may be understood that the second deflection component 1222 in FIG. 14 may alternatively be replaced by a lens with a uniform curvature radius and a transparent glass sheet with an unequal thickness. Details are not described herein again.

Examples in FIG. 13a to FIG. 14 describe examples in which the first position and the second position in the second deflection component 1222 have different deflection capabilities for a same light beam. A principle of a specific optical path in which the third position and the fourth position in the first deflection component 1221 have different deflection capabilities for a same light beam is similar to principles of the foregoing two examples. Details are not described herein again.

In a second optional manner, a deflection effect of the first deflection component 1221 and/or the second deflection component 1222 on the 0-order diffracted light is a divergence effect, and a deflection effect on the +1-order diffracted light is a convergence effect. The second deflection component 1222 is used as an example. A deflection effect of the first position on the second deflection component 1222 on the light beam is a divergence effect, and a deflection effect of the second position on the second deflection component 1222 on the light beam is a convergence effect. For example, when the second deflection component 1222 is a lens, the first position may be a concave lens, and the second position may be a convex lens. Refer to an example in FIG. 15. FIG. 15 is a schematic diagram of suppression of crosstalk light by a deflection component with an asymmetric deflection effect according to an embodiment of this application. As shown in FIG. 15, an illumination position of the 0-order diffracted light diffracted by the LCoS assembly 123 on the second deflection component 1222 is a position 9, and an illumination position of the diffracted +1-order diffracted light on the second deflection component 1222 is a position 10. The position 9 on the second deflection component 1222 is a concave lens, and the position 10 is a convex lens. Therefore, the second deflection component 1222 has a divergence effect on the 0-order diffracted light and a convergence effect on the +1-order diffracted light. In this way, the +1-order diffracted light may converge at the position 11 of the output port 124, and the 0-order diffracted light is diverged into an optical path outside the output port 124, so that the 0-order diffracted light is not transmitted into the output port 124 and causes crosstalk to the signal light. It may be understood that, when the second deflection component 1222 is a reflector, the first position may be a convex reflector, and the second position may be a concave reflector. Examples are not described herein again.

In a third alternative implementation, the first position and the second position on the second deflection component 1222 have different deflection capabilities for a same light beam, and the third position and the fourth position on the first deflection component 1221 have different deflection capabilities for a same light beam. The second deflection component 1222 and the first deflection component 1221 deflect the 0-order diffracted light and the +1-order diffracted light, so that the +1-order diffracted light converges to the output port 124, and a convergence position of the 0-order diffracted light does not completely overlap the output port 124.

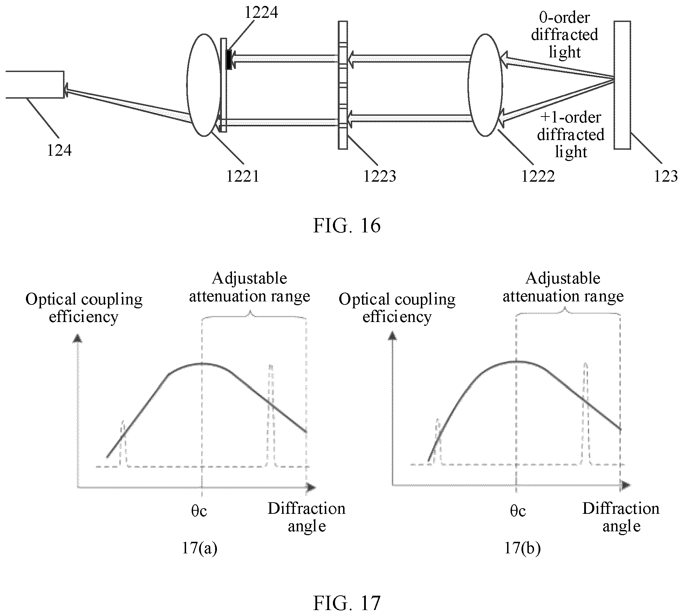

In addition, the optical path conversion assembly 122 may further have alternative implementations based on different transmittance capabilities. In a fourth alternative implementation, a first suppression element 1224 is disposed on one or more of the first deflection component 1221, the second deflection component 1222, and the demultiplexing/multiplexing component 1223, and the first suppression element 1224 is configured to suppress the 0-order diffracted light. In a transmission process of diffracted light of a second light beam, the optical path conversion assembly 122 suppresses the 0-order diffracted light by using the first suppression element 1224, so that a transmittance capability for the +1-order diffracted light is higher than a transmittance capability for the +1-order diffracted light. The first suppression element 1224 may be disposed on any of the foregoing components through adherence or the like. The first suppression element 1224 may suppress a part or all of the 0-order diffracted light. For example, the first suppression element 1224 may be a light shielding plate. For another example, the first suppression element 1224 may be an optical filter that has a function of filtering a part or all of the 0-order diffracted light. FIG. 16 is a schematic diagram of suppression of crosstalk light by a first suppression element according to an embodiment of this application. FIG. 16 may be used as an example for description.

As shown in FIG. 16, the first suppression element 1224 is a light shielding plate, the first deflection component 1221 includes a lens and a uniform light-transmitting glass sheet, and the first suppression element 1224 is disposed in front of the uniform light-transmitting glass sheet of the first deflection component 1221 to block transmission of the 0-order diffracted light, so that the 0-order diffracted light is prevented from being transmitted into the output port 124 to cause crosstalk to the signal light.

In a fifth alternative implementation, a transmittance capability of the optical path conversion assembly 122 for the +1-order diffracted light is higher than a transmittance capability for the 0-order diffracted light, and the optical path conversion assembly has different deflection capabilities for the 0-order diffracted light and for the +1-order diffracted light, so that a loss of the 0-order diffracted light is implemented. For example, in a specific implementation, in the optical path conversion assembly 122, a suppression element is disposed on the second deflection component 1222. The suppression element is configured to attenuate the 0-order diffracted light to a specific extent, and the first deflection component 1221 has a convergence effect on the +1-order diffracted light, so that the +1-order diffracted light converges to the output port. However, the first deflection component 1221 has a divergent effect on the 0-order diffracted light, and further implements the loss of the 0-order and the diffracted light. In this way, the loss of the 0-order diffracted light is implemented by controlling both the transmittance capability and the deflection capability. For other specific implementations, specific implementations in the first to third alternative implementations may be combined with the fourth alternative implementation, to obtain more specific implementations in the fifth alternative implementation. This is not exhaustively listed herein.

Further, if focal lengths of the first deflection component 1221 and the second deflection component 1222 are a first focal length, and a position of the first suppression element 1224 may be determined based on the first focal length and an incidence angle of the second light beam on the LCoS assembly. For example, if the second deflection component 1222 is a convex lens, the first suppression element 1224 is disposed on the second deflection component 1222 through adherence, a distance x from a position of the first suppression element 1224 on the second deflection component 1222 to a center of the second deflection component 1222 may be determined by using the following formula: *x = f* ×*tan*(*2a*) *≈ 2f* ×*a,* where f is a first focal length, and *a* is an incidence angle of the second light beam on the LCoS assembly. It should be understood that a theoretical position of the first suppression element 1224 is determined based on the foregoing formula. During actual application, the position of the first suppression element 1224 may also be obtained through experimental testing or a combination of theoretical and experimental testing.

Optionally, components in the optical processing apparatus 12 may constitute a 4f system. Focal lengths of the first deflection component 1221 and the second deflection component 1222 are both f. A distance between the input port 121 and the first deflection component 1221, a distance between the first deflection component 1221 and the demultiplexing/multiplexing component 1223, a distance between the demultiplexing/multiplexing component 1223 and the second deflection component 1222, and a distance between the second deflection component 1222 and the LCoS assembly are all f. It should be understood that cases such as element sharing and optical path folding may exist in the 4f system.

Optionally, after positions of components in the optical processing apparatus 12 are fixed, a diffraction angle (namely, a first diffraction angle) with the highest coupling efficiency and the lowest coupling loss in a process in which light is transmitted from the LCoS panel to the output port may be determined. When a diffraction angle of the +1-order diffracted light in the LCoS assembly is equal to the first diffraction angle, the +1-order diffracted light has the lowest coupling loss in a process from being emitted from the LCoS assembly to being output by the output port in a collimated manner. For descriptions of the first diffraction angle, refer to the foregoing descriptions of the optimal diffraction angle, and details are not described herein again. In this embodiment of this application, a diffraction angle of the 0-order diffracted light on the LCoS is less than the first diffraction angle, and a diffraction angle of the +1-order diffracted light on the LCoS assembly is greater than or equal to the first diffraction angle; or a diffraction angle of the 0-order diffracted light on the LCoS assembly is greater than the first diffraction angle, and a diffraction angle of the +1-order diffracted light on the LCoS assembly is greater than or equal to the first diffraction angle.

By distributing the 0-order diffracted light and the +1-order diffracted light on both sides of the first diffraction angle, the diffracted light of the second light beam may further include diffracted light of a diffraction order such as +2-order diffracted light. Because an angle between the +2-order diffracted light and the +1-order diffracted light diffracted from the LCoS is approximately equal to twice an angle between the +1-order diffracted light and the 0-order diffracted light diffracted from the LCoS, diffraction angles of the 0-order diffracted light and the +1-order diffracted light are distributed on the two sides of the first diffraction angle, so that a distance between diffracted light of a diffraction order such as the +2-order diffracted light and the +1-order diffracted light is longer, and crosstalk to the +1-order diffracted light is reduced. In addition, the 0-order diffracted light and the +1-order diffracted light are distributed on the two sides of the first diffraction angle, so that when the 0-order diffracted light is attenuated, it can be ensured that the adjustable attenuation range of the +1-order diffracted light is not affected. FIG. 17 may be used as an example for description. FIG. 17 is a schematic diagram of an adjustable attenuation range of an optical processing apparatus according to an embodiment of this application. 17(a) in FIG. 17 shows an adjustable attenuation range of the optical processing apparatus 12 when the optical path conversion assembly 122 is shown in the first or second alternative implementation in this embodiment of this application, and 17(b) shows an adjustable attenuation range of the optical processing apparatus 12 when the optical path conversion assembly 122 is shown in the fourth alternative implementation in this embodiment of this application. In 17 (a) and 17 (b), θc is an optimal diffraction angle, and the right side of θc is the adjustable attenuation range (namely, an adjustable range of a diffraction angle of the +1-order diffracted light) of the optical processing apparatus 12. The diffraction angle of the 0-order diffracted light is distributed on the left side of θc, and the loss of the 0-order diffracted light is achieved by reducing optical coupling efficiency on the left side of θc. By using this asymmetric design of optical coupling efficiency on the left side and the right side of θc, it is realized that the adjustable attenuation range of the +1-order diffracted light is not affected while the 0-order diffracted light is attenuated.

Optionally, in the optical processing apparatus 12 in this embodiment of this application, the incidence angle of the second light beam on the LCoS assembly is greater than zero, so that after the second light beam is incident on the LCoS assembly at a zero-degree incidence angle, 0-order diffracted light is prevented from returning in an original path at the zero-degree diffraction angle, and a situation that causes crosstalk to the signal light is avoided.

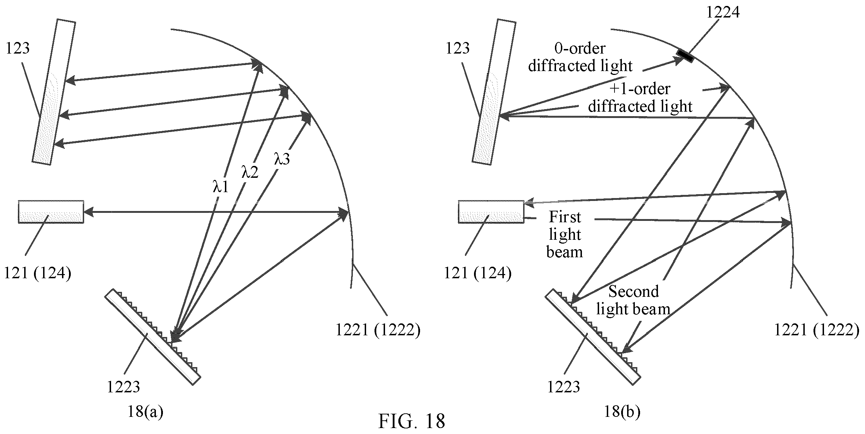

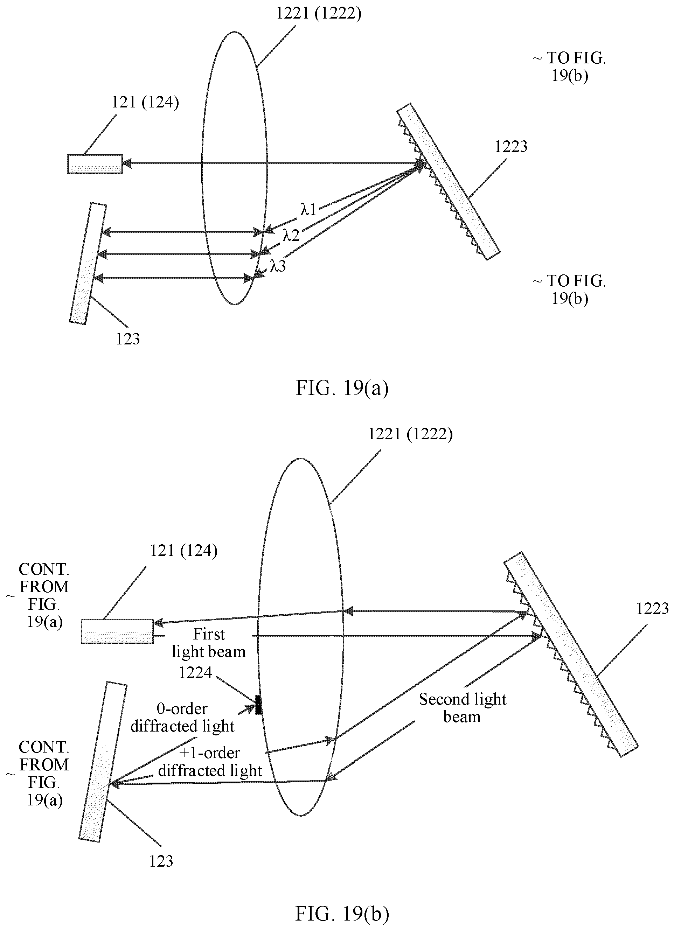

It may be understood that, to save costs and reduce a size of the apparatus, optical path folding, component sharing, and the like may also be performed in the optical processing apparatus 12 provided in this embodiment of this application. Examples are described with reference to FIG. 18, FIG. 19(a), and FIG. 19(b). FIG. 18, FIG. 19(a), and FIG. 19(b) are schematic diagrams of structures of other optical processing apparatuses according to embodiments of this application.

In the optical processing apparatus shown in FIG. 18, an input port 121 and an output port 124 share a same port, a first deflection component 1221 and a second deflection component 1222 in an optical path conversion assembly 122 share a same concave reflector, and a first suppression element 1224 is disposed on the concave reflector. In the optical processing apparatus shown in FIG. 19(a) and FIG. 19(b), an input port 121 and an output port 124 share a same port, a first deflection component 1221 and a second deflection component 1222 in an optical path conversion assembly 122 share a same convex lens, and a first suppression element 1224 is disposed on the convex lens.

18(a) and FIG. 19(a) respectively show optical paths of the two optical processing apparatuses in the wavelength direction. In the wavelength direction, a first light beam received by the input port 121 is dispersed into a plurality of single-wavelength light beams by the demultiplexing/multiplexing component 1223. 18 (a) and FIG. 19 (a) show three single-wavelength light beams (represented by λ1, λ2, and λ3 respectively) in examples. 18(b) and FIG. 19(b) show optical paths of the two optical processing apparatuses in the port direction. Any single-wavelength light beam obtained by the demultiplexing/multiplexing component 1223 through dispersion may be considered as a second light beam. In the port direction, the second light beam is illuminated on the LCoS assembly and is diffracted. After 0-order diffracted light is diffracted from the LCoS assembly, the 0-order diffracted light is illuminated on the first suppression element 1224. The first suppression element 1224 blocks transmission of the 0-order diffracted light, to implement attenuation of the 0-order diffracted light, and reduce crosstalk of the 0-order diffracted light to +1-order diffracted light.

It should be noted that FIG. 18, FIG. 19(a), and FIG. 19(b) are merely used to describe how the optical processing apparatus in embodiments of this application implements, in a case of optical path folding or element sharing, that a projection capability of the optical path conversion assembly for +1-order diffracted light is higher than a projection capability for 0-order diffracted light, or that a deflection capability of the optical path conversion assembly for the +1-order diffracted light is different from a deflection capability for the 0-order diffracted light. This does not represent all solutions for implementing the foregoing functions defined in this application. There are still a plurality of other solutions. For example, FIG. 18 and FIG. 19(a) and FIG. 19(b) each show an angle matching manner. Alternatively, another lens may be disposed between the second deflection component 1222 and the output port 124 in FIG. 18, FIG. 19(a), or FIG. 19(b) to implement a displacement matching manner. For another example, FIG. 18, FIG. 19(a), and FIG. 19(b) each show a manner in which transmission of the 0-order diffracted light is blocked by the first suppression element 1224. Alternatively, the second deflection component 1222 in FIG. 18 may be designed to be a concave reflector with an uneven curvature radius, or the second deflection component 1222 in FIG. 19(a) and FIG. 19(b) may be designed to be a convex lens with an uneven spherical aberration, to implement that the +1-order diffracted light is transmitted and converged to the output port, and that the 0-order diffracted light is reflected or refracted to a position that deviates from the output port. All manners are not exhaustively listed herein.

An embodiment of this application further provides an optical system. The optical system is configured to process an input first light beam in frequency domain, and output a light beam obtained through processing. For example, the optical system may be a tunable optical filter, and may filter light of a specific wavelength (or frequency) in the first light beam, and output a filtered light beam. For another example, the optical system may be an optical signal power equalizer, and may perform power adjustment on light of each wavelength (or frequency) in the first light beam, and output a light beam whose power is adjusted. For another example, the optical system may be a wavelength selective switch, and may screen light of a specified wavelength (or frequency) in the first light beam, and output a light beam obtained through screening. The optical processing apparatus may be the optical processing apparatus corresponding to any one of FIG. 12 to FIG. 16 or FIG. 18, FIG. 19(a), and FIG. 19(b) in embodiments of this application, to reduce crosstalk caused by 0-order diffracted light to signal light in the optical system.

In descriptions in embodiments of this application, "/" means "or" unless otherwise specified. For example, A/B may represent A or B. In the specification, "and/or" describes only an association relationship for describing associated objects and may represent that three relationships may exist. For example, A and/or B may represent the following three cases: Only A exists, both A and B exist, and only B exists. In addition, in descriptions in embodiments of this application, the term "a plurality of" means two or more than two.

## Claims

1. An optical processing apparatus (12), comprising an input port (121), an optical path conversion assembly (122), an LCoS assembly (123), and an output port (124), wherein
the input port (121) is configured to receive a first light beam;
the optical path conversion assembly (122) is configured to disperse the first light beam to obtain a second light beam, wherein the second light beam is a single-wavelength light beam;
the LCoS assembly (123) is configured to diffract the second light beam to obtain diffracted light of the second light beam, wherein the LCoS assembly (123) comprises a plurality of pixels, light beams received by the plurality of pixels correspond to different diffraction angles, the diffraction angles are used to control an attenuation degree of the light beams received by the pixels in the optical processing apparatus (12), and the diffracted light of the second light beam comprises 0-order diffracted light and +1-order diffracted light;
the optical path conversion assembly (122) is further configured to: transmit the diffracted light of the second light beam, and converge the +1-order diffracted light to the output port (124), wherein a deflection capability of the optical path conversion assembly (122) for the 0-order diffracted light is different from a deflection capability for the +1-order diffracted light; and
the output port (124) is configured to output the received +1-order diffracted light in a collimated manner,
wherein the optical path conversion assembly (122) comprises a first deflection component (1221)
wherein a deflection effect of a first position on the second deflection component (1222) on a light beam is a divergence effect, and a deflection effect of a second position on the second deflection component (1222) on a light beam is a convergence effect; and/or
a deflection effect of a third position on the first deflection component (1221) on a light beam is a divergence effect, and a deflection effect of a fourth position on the first deflection component (1221) on a light beam is a convergence effect,
wherein the optical path conversion assembly (122) comprises a first deflection component (1221), a second deflection component (1222), and a demultiplexing/multiplexing component (1223); the demultiplexing/multiplexing component (1223) is configured to disperse the first light beam passing through the first deflection component (1221) to obtain the second light beam; the second deflection component (1222) is configured for incidence of the second light beam into the LCoS assembly (123); and that deflection capabilities are different comprises that deflection effects are different and/or that deflection intensities are different, **characterized in that** the first position and the second position on the second deflection component (1222) have different deflection capabilities for a same light beam, wherein the first position is an illumination position corresponding to the 0-order diffracted light on the second deflection component (1222), and the second position is an illumination position corresponding to the +1-order diffracted light on the second deflection component (1222), wherein a deflection effect of the first position on the second deflection component (1222) on a light beam is a divergence effect, and a deflection effect of the second position on the second deflection component (1222) on a light beam is a convergence effect; and/or
the third position and the fourth position on the first deflection component (1221) have different deflection capabilities for a same light beam, wherein the third position is an illumination position corresponding to the 0-order diffracted light on the first deflection component (1221), and the fourth position is an illumination position corresponding to the +1-order diffracted light on the first deflection component (1221), wherein a deflection effect of the third position on the first deflection component (1221) on a light beam is a divergence effect, and a deflection effect of the fourth position on the first deflection component (1221) on a light beam is a convergence effect.

2. The apparatus according to claim 1, wherein a transmittance capability of the optical path conversion assembly (122) for the +1-order diffracted light is higher than a transmittance capability for the 0-order diffracted light.

3. An optical processing apparatus (12), comprising an input port (121), an optical path conversion assembly (122), an LCoS assembly (123), and an output port (124), wherein
the input port (121) is configured to receive a first light beam;
the optical path conversion assembly (122) is configured to disperse the first light beam to obtain a second light beam, wherein the second light beam is a single-wavelength light beam;
the LCoS assembly (123) is configured to diffract the second light beam to obtain diffracted light of the second light beam, wherein the LCoS assembly (123) comprises a plurality of pixels, light beams received by the plurality of pixels correspond to different diffraction angles, the diffraction angles are used to control an attenuation degree of the light beams received by the pixels in the optical processing apparatus (12), and the diffracted light of the second light beam comprises 0-order diffracted light and +1-order diffracted light;
the optical path conversion assembly (122) is further configured to: transmit the diffracted light of the second light beam, and converge the +1-order diffracted light to the output port (124), wherein a transmittance capability of the optical path conversion assembly (122) for the +1-order diffracted light is higher than a transmittance capability for the 0-order diffracted light; and
the output port (124) is configured to output the received +1-order diffracted light in a collimated manner, wherein the optical path conversion assembly (122) comprises a first deflection component (1221), a second deflection component (1222), and a demultiplexing/multiplexing component (1223); the demultiplexing/multiplexing component (1223) is configured to disperse the first light beam passing through the first deflection component (1221) to obtain the second light beam; and the second deflection component (1222) is configured for incidence of the second light beam into the LCoS assembly (123), characterizied in that
a first suppression element (1224) is disposed on one or more of the first deflection component (1221), the second deflection component (1222), and the demultiplexing/multiplexing component (1223), and the first suppression element (1224) is configured to suppress the 0-order diffracted light.

4. The apparatus according to claim 3, wherein focal lengths of the first deflection component (1221) and the second deflection component (1222) are a first focal length, and a position of the first suppression element (1224) is determined based on the first focal length and an incidence angle of the second light beam on the LCoS assembly (123).

5. The apparatus according to claim 3 or 4, wherein a deflection capability of the optical path conversion assembly (122) for the 0-order diffracted light is different from a deflection capability for the +1-order diffracted light.

6. The apparatus according to any one of claims 1 to 5, wherein when a diffraction angle of the +1-order diffracted light on the LCoS assembly (123) is equal to a first diffraction angle, a coupling loss of the +1-order diffracted light is the lowest in a process from being emitted from the LCoS assembly (123) to being output by the output port (124) in a collimated manner;
a diffraction angle of the 0-order diffracted light on the LCoS assembly (123) is less than the first diffraction angle, and a diffraction angle of the +1-order diffracted light on the LCoS assembly (123) is greater than or equal to the first diffraction angle; or a diffraction angle of the 0-order diffracted light on the LCoS assembly (123) is greater than the first diffraction angle, and a diffraction angle of the +1-order diffracted light on the LCoS assembly (123) is less than or equal to the first diffraction angle.

7. The apparatus according to any one of claims 1 to 5, wherein an incidence angle of the second light beam on the LCoS assembly (123) is greater than zero.

8. An optical system, configured to: process an input first light beam in a frequency domain, and output a light beam obtained through processing, wherein the optical system comprises an optical processing apparatus (12), and the optical processing apparatus (12) is the optical processing apparatus (12) according to any one of claim 1 to claim 6.

## Patentansprüche

1. Optische Verarbeitungsvorrichtung (12), umfassend einen Eingangsanschluss (121), eine Baugruppe (122) zur optischen Wegumkehrung, eine LCoS-Baugruppe (123) und einen Ausgangsanschluss (124), wobei
der Eingangsanschluss (121) dazu konfiguriert ist, einen ersten Lichtstrahl zu empfangen;
die Baugruppe (122) zur optischen Wegumkehrung dazu konfiguriert ist, den ersten Lichtstrahl zu streuen, um einen zweiten Lichtstrahl zu erlangen, wobei der zweite Lichtstrahl ein Lichtstrahl mit einer einzigen Wellenlänge ist;
die LCoS-Baugruppe (123) dazu konfiguriert ist, den zweiten Lichtstrahl zu beugen, um gebeugtes Licht des zweiten Lichtstrahls zu erlangen, wobei die LCoS-Baugruppe (123) eine Vielzahl von Pixeln umfasst, die Lichtstrahlen, die durch die Vielzahl von Pixeln empfangen werden, unterschiedlichen Beugungswinkeln entsprechen, die Beugungswinkel dazu verwendet werden, einen Dämpfungsgrad der Lichtstrahlen, die durch die Pixel in der optischen Verarbeitungsvorrichtung (12) empfangen werden, zu steuern und das gebeugte Licht des zweiten Lichtstrahls gebeugtes Licht 0. Ordnung und gebeugtes Licht +1. Ordnung umfasst;
die Baugruppe (122) zur optischen Wegumkehrung ferner zu Folgendem konfiguriert ist: Übertragen des gebeugten Lichts des zweiten Lichtstrahls und Konvergieren des gebeugten Lichts +1. Ordnung zu dem Ausgangsanschluss (124), wobei sich eine Ablenkfähigkeit der Baugruppe (122) zur optischen Wegumkehrung für das gebeugte Licht 0. Ordnung von einer Ablenkfähigkeit für das gebeugte Licht +1. Ordnung unterscheidet; und
der Ausgangsanschluss (124) dazu konfiguriert ist, das empfangene gebeugte Licht +1. Ordnung kollimiert auszugeben,
wobei die Baugruppe (122) zur optischen Wegumkehrung eine erste Ablenkkomponente (1221) umfasst, wobei ein Ablenkeffekt einer ersten Position auf der zweiten Ablenkkomponente (1222) auf einen Lichtstrahl ein Divergenzeffekt ist und ein Ablenkeffekt einer zweiten Position auf der zweiten Ablenkkomponente (1222) auf einen Lichtstrahl ein Konvergenzeffekt ist; und/oder
ein Ablenkeffekt einer dritten Position auf der ersten Ablenkkomponente (1221) auf einen Lichtstrahl ein Divergenzeffekt ist und ein Ablenkeffekt einer vierten Position auf der ersten Ablenkkomponente (1221) auf einen Lichtstrahl ein Konvergenzeffekt ist,
wobei die Baugruppe (122) zur optischen Wegumkehrung eine erste Ablenkkomponente (1221), eine zweite Ablenkkomponente (1222) und eine Demultiplex-/Multiplexkomponente (1223) umfasst; die Demultiplex-/Multiplexkomponente (1223) dazu konfiguriert ist, den ersten Lichtstrahl, der durch die erste Ablenkkomponente (1221) hindurchgeht, zu streuen, um den zweiten Lichtstrahl zu erlangen; die zweite Ablenkkomponente (1222) für den Einfall des zweiten Lichtstrahls in die LCoS-Baugruppe (123) konfiguriert ist; und dass die Ablenkfähigkeiten unterschiedlich sind, umfasst, dass die Ablenkeffekte unterschiedlich sind und/oder dass die Ablenkintensitäten unterschiedlich sind, **dadurch gekennzeichnet, dass**
die erste Position und die zweite Position auf der zweiten Ablenkkomponente (1222) unterschiedliche Ablenkfähigkeiten für denselben Lichtstrahl aufweisen, wobei die erste Position eine Beleuchtungsposition ist, die dem gebeugten Licht 0. Ordnung auf der zweiten Ablenkkomponente (1222) entspricht, und die zweite Position eine Beleuchtungsposition ist, die dem gebeugten Licht +1. Ordnung auf der zweiten Ablenkkomponente (1222) entspricht, wobei ein Ablenkeffekt der ersten Position auf der zweiten Ablenkkomponente (1222) auf einen Lichtstrahl ein Divergenzeffekt ist und ein Ablenkeffekt der zweiten Position auf der zweiten Ablenkkomponente (1222) auf einen Lichtstrahl ein Konvergenzeffekt ist; und/oder
die dritte Position und die vierte Position auf der ersten Ablenkkomponente (1221) unterschiedliche Ablenkfähigkeiten für denselben Lichtstrahl aufweisen, wobei die dritte Position eine Beleuchtungsposition ist, die dem gebeugten Licht 0. Ordnung auf der ersten Ablenkkomponente (1221) entspricht, und die vierte Position eine Beleuchtungsposition ist, die dem gebeugten Licht +1. Ordnung auf der ersten Ablenkkomponente (1221) entspricht, wobei ein Ablenkeffekt der dritten Position auf der ersten Ablenkkomponente (1221) auf einen Lichtstrahl ein Divergenzeffekt ist und ein Ablenkeffekt der vierten Position auf der ersten Ablenkkomponente (1221) auf einen Lichtstrahl ein Konvergenzeffekt ist.

2. Vorrichtung nach Anspruch 1, wobei eine Durchlässigkeitsfähigkeit der Baugruppe (122) zur optischen Wegumkehrung für das gebeugte Licht +1. Ordnung höher ist als eine Durchlässigkeitsfähigkeit für das gebeugte Licht 0. Ordnung.

3. Optische Verarbeitungsvorrichtung (12), umfassend einen Eingangsanschluss (121), eine Baugruppe (122) zur optischen Wegumkehrung, eine LCoS-Baugruppe (123) und einen Ausgangsanschluss (124), wobei
der Eingangsanschluss (121) dazu konfiguriert ist, einen ersten Lichtstrahl zu empfangen;
die Baugruppe (122) zur optischen Wegumkehrung dazu konfiguriert ist, den ersten Lichtstrahl zu streuen, um einen zweiten Lichtstrahl zu erlangen, wobei der zweite Lichtstrahl ein Lichtstrahl mit einer einzigen Wellenlänge ist;
die LCoS-Baugruppe (123) dazu konfiguriert ist, den zweiten Lichtstrahl zu beugen, um gebeugtes Licht des zweiten Lichtstrahls zu erlangen, wobei die LCoS-Baugruppe (123) eine Vielzahl von Pixeln umfasst, die Lichtstrahlen, die durch die Vielzahl von Pixeln empfangen werden, unterschiedlichen Beugungswinkeln entsprechen, die Beugungswinkel dazu verwendet werden, einen Dämpfungsgrad der Lichtstrahlen, die durch die Pixel in der optischen Verarbeitungsvorrichtung (12) empfangen werden, zu steuern und das gebeugte Licht des zweiten Lichtstrahls gebeugtes Licht 0. Ordnung und gebeugtes Licht +1. Ordnung umfasst;
die Baugruppe (122) zur optischen Wegumkehrung ferner zu Folgendem konfiguriert ist: Übertragen des gebeugten Lichts des zweiten Lichtstrahls und Konvergieren des gebeugten Lichts +1. Ordnung zu dem Ausgangsanschluss (124), wobei sich eine Durchlässigkeitsfähigkeit der Baugruppe (122) zur optischen Wegumkehrung für das gebeugte Licht +1. Ordnung größer ist als eine Durchlässigkeitsfähigkeit für das gebeugte Licht 0. Ordnung; und
der Ausgangsanschluss (124) dazu konfiguriert ist, das empfangene gebeugte Licht +1. Ordnung kollimiert auszugeben, wobei die Baugruppe (122) zur optischen Wegumkehrung eine erste Ablenkkomponente (1221), eine zweite Ablenkkomponente (1222) und eine Demultiplex-/Multiplexkomponente (1223) umfasst; die Demultiplex-/Multiplexkomponente (1223) dazu konfiguriert ist, den ersten Lichtstrahl, der durch die erste Ablenkkomponente (1221) hindurchgeht, zu streuen, um den zweiten Lichtstrahl zu erlangen; und die zweite Ablenkkomponente (1222) für den Einfall des zweiten Lichtstrahls in die LCoS-Baugruppe (123) konfiguriert ist, **dadurch gekennzeichnet, dass**
ein erstes Unterdrückungselement (1224) auf einer oder mehreren der ersten Ablenkkomponente (1221), der zweiten Ablenkkomponente (1222) und der Demultiplex-/Multiplexkomponente (1223) angeordnet ist und das erste Unterdrückungselement (1224) dazu konfiguriert ist, das gebeugte Licht 0. Ordnung zu unterdrücken.

4. Vorrichtung nach Anspruch 3, wobei Brennweiten der ersten Ablenkkomponente (1221) und der zweiten Ablenkkomponente (1222) eine erste Brennweite sind und eine Position des ersten Unterdrückungselements (1224) basierend auf der ersten Brennweite und einem Einfallswinkel des zweiten Lichtstrahls auf der LCoS-Baugruppe (123) bestimmt wird.

5. Vorrichtung nach Anspruch 3 oder 4, wobei sich eine Ablenkfähigkeit der Baugruppe (122) zur optischen Wegumkehrung für das gebeugte Licht 0. Ordnung von einer Ablenkfähigkeit für das gebeugte Licht +1. Ordnung unterscheidet.

6. Vorrichtung nach einem der Ansprüche 1 bis 5, wobei, wenn ein Beugungswinkel des gebeugten Lichts +1. Ordnung auf der LCoS-Baugruppe (123) gleich einem ersten Beugungswinkel ist, ein Kopplungsverlust des gebeugten Lichts +1. Ordnung in einem Prozess von der Emission von der LCoS-Baugruppe (123) bis zur kollimierten Ausgabe durch den Ausgangsanschluss (124) am geringsten ist;
ein Beugungswinkel des gebeugten Lichts 0. Ordnung auf der LCoS-Baugruppe (123) kleiner als der erste Beugungswinkel ist und ein Beugungswinkel des gebeugten Lichts +1. Ordnung auf der LCoS-Baugruppe (123) größer oder gleich dem ersten Beugungswinkel ist; oder ein Beugungswinkel des gebeugten Lichts 0. Ordnung auf der LCoS-Baugruppe (123) größer als der erste Beugungswinkel ist und ein Beugungswinkel des gebeugten Lichts +1. Ordnung auf der LCoS-Baugruppe (123) kleiner oder gleich dem ersten Beugungswinkel ist.

7. Vorrichtung nach einem der Ansprüche 1 bis 5, wobei ein Einfallswinkel des zweiten Lichtstrahls auf der LCoS-Baugruppe (123) größer als Null ist.

8. Optisches System, das zu Folgendem konfiguriert ist: Verarbeiten eines ersten Eingangslichtstrahls in einem Frequenzbereich und Ausgeben eines Lichtstrahls, der durch die Verarbeitung erlangt wird, wobei das optische System eine optische Verarbeitungsvorrichtung (12) umfasst und die optische Verarbeitungsvorrichtung (12) die optische Verarbeitungsvorrichtung (12) nach einem der Ansprüche 1 bis 6 ist.

## Revendications

1. Appareil de traitement optique (12), comprenant un port d'entrée (121), un ensemble de conversion de chemin optique (122), un ensemble LCoS (123) et un port de sortie (124), dans lequel
le port d'entrée (121) est configuré pour recevoir un premier faisceau lumineux ;
l'ensemble de conversion de chemin optique (122) est configuré pour disperser le premier faisceau lumineux pour obtenir un second faisceau lumineux, dans lequel le second faisceau lumineux est un faisceau lumineux à longueur d'onde unique ;
l'ensemble LCoS (123) est configuré pour diffracter le second faisceau lumineux pour obtenir une lumière diffractée du second faisceau lumineux, dans lequel l'ensemble LCoS (123) comprend une pluralité de pixels, les faisceaux lumineux reçus par la pluralité de pixels correspondent à différents angles de diffraction, les angles de diffraction sont utilisés pour commander un degré d'atténuation des faisceaux lumineux reçus par les pixels dans l'appareil de traitement optique (12), et la lumière diffractée du second faisceau lumineux comprend une lumière diffractée d'ordre 0 et une lumière diffractée d'ordre +1 ;
l'ensemble de conversion de chemin optique (122) est également configuré pour : transmettre la lumière diffractée du second faisceau lumineux, et faire converger la lumière diffractée d'ordre +1 vers le port de sortie (124), dans lequel une capacité de déviation de l'ensemble de conversion de chemin optique (122) pour la lumière diffractée d'ordre 0 est différente de la capacité de déviation pour la lumière diffractée d'ordre +1 ; et
le port de sortie (124) est configuré pour délivrer la lumière diffractée d'ordre +1 reçue de manière collimatée,
dans lequel l'ensemble de conversion de chemin optique (122) comprend un premier composant de déviation (1221) dans lequel un effet de déviation d'une première position sur le second composant de déviation (1222) sur un faisceau lumineux est un effet de divergence, et un effet de déviation d'une deuxième position sur le second composant de déviation (1222) sur un faisceau lumineux est un effet de convergence ; et/ou un effet de déviation d'une troisième position sur le premier composant de déviation (1221) sur un faisceau lumineux est un effet de divergence, et un effet de déviation d'une quatrième position sur le premier composant de déviation (1221) sur un faisceau lumineux est un effet de convergence,
dans lequel l'ensemble de conversion de chemin optique (122) comprend un premier composant de déviation (1221), un second composant de déviation (1222) et un composant de démultiplexage/multiplexage (1223) ; le composant de démultiplexage/multiplexage (1223) est configuré pour disperser le premier faisceau lumineux traversant le premier composant de déviation (1221) pour obtenir le second faisceau lumineux ; le second composant de déviation (1222) est configuré pour l'incidence du second faisceau lumineux dans l'ensemble LCoS (123) ; et le fait que des capacités de déviation sont différentes comprend le fait que les effets de déviation sont différents et/ou que les intensités de déviation sont différentes, caractérisé en que
la première position et la deuxième position sur le second composant de déviation (1222) ont des capacités de déviation différentes pour un même faisceau lumineux, dans lequel la première position est une position d'illumination correspondant à la lumière diffractée d'ordre 0 sur le second composant de déviation (1222), et la deuxième position est une position d'illumination correspondant à la lumière diffractée d'ordre +1 sur le second composant de déviation (1222), dans lequel un effet de déviation de la première position sur le second composant de déviation (1222) d'un faisceau lumineux est un effet de divergence, et l'effet de déviation de la deuxième position sur le second composant de déviation (1222) d'un faisceau lumineux est un effet de convergence ; et/ou
la troisième position et la quatrième position sur le premier composant de déviation (1221) ont des capacités de déviation différentes pour un même faisceau lumineux, dans lequel la troisième position est une position d'illumination correspondant à la lumière diffractée d'ordre 0 sur le premier composant de déviation (1221), et la quatrième position est une position d'illumination correspondant à la lumière diffractée d'ordre +1 sur le premier composant de déviation (1221), dans lequel un effet de déviation de la troisième position sur le premier composant de déviation (1221) d'un faisceau lumineux est un effet de divergence, et l'effet de déviation de la quatrième position sur le premier composant de déviation (1221) d'un faisceau lumineux est un effet de convergence.

2. Appareil selon la revendication 1, dans lequel une capacité de transmission de l'ensemble de conversion de chemin optique (122) pour la lumière diffractée d'ordre +1 est supérieure à une capacité de transmission pour la lumière diffractée d'ordre 0.

3. Appareil de traitement optique (12), comprenant un port d'entrée (121), un ensemble de conversion de chemin optique (122), un ensemble LCoS (123) et un port de sortie (124), dans lequel
le port d'entrée (121) est configuré pour recevoir un premier faisceau lumineux ;
l'ensemble de conversion de chemin optique (122) est configuré pour disperser le premier faisceau lumineux pour obtenir un second faisceau lumineux, dans lequel le second faisceau lumineux est un faisceau lumineux à longueur d'onde unique ;
l'ensemble LCoS (123) est configuré pour diffracter le second faisceau lumineux pour obtenir une lumière diffractée du second faisceau lumineux, dans lequel l'ensemble LCoS (123) comprend une pluralité de pixels, les faisceaux lumineux reçus par la pluralité de pixels correspondent à différents angles de diffraction, les angles de diffraction sont utilisés pour commander un degré d'atténuation des faisceaux lumineux reçus par les pixels dans l'appareil de traitement optique (12), et la lumière diffractée du second faisceau lumineux comprend une lumière diffractée d'ordre 0 et une lumière diffractée d'ordre +1 ;
l'ensemble de conversion de chemin optique (122) est également configuré pour : transmettre la lumière diffractée du second faisceau lumineux, et faire converger la lumière diffractée d'ordre +1 vers le port de sortie (124), dans lequel une capacité de transmission de l'ensemble de conversion de chemin optique (122) pour la lumière diffractée d'ordre +1 est supérieure à une capacité de transmission pour la lumière diffractée d'ordre 0 ; et
le port de sortie (124) est configuré pour délivrer la lumière diffractée d'ordre +1 reçue de manière collimatée, dans lequel l'ensemble de conversion de chemin optique (122) comprend un premier composant de déviation (1221), un second composant de déviation (1222) et un composant de démultiplexage/multiplexage (1223) ; le composant de démultiplexage/multiplexage (1223) est configuré pour disperser le premier faisceau lumineux traversant le premier composant de déviation (1221) pour obtenir le second faisceau lumineux ; et le second composant de déviation (1222) est configuré pour l'incidence du second faisceau lumineux dans l'ensemble LCoS (123), **caractérisé en ce**
**qu'**un premier élément de suppression (1224) est disposé sur l'un ou plusieurs du premier composant de déviation (1221), du second composant de déviation (1222) et du composant de démultiplexage/multiplexage (1223), et le premier élément de suppression (1224) est configuré pour supprimer la lumière diffractée d'ordre 0.

4. Appareil selon la revendication 3, dans lequel les distances focales du premier composant de déviation (1221) et du second composant de déviation (1222) sont une première distance focale, et une position du premier élément de suppression (1224) est déterminée sur la base de la première distance focale et d'un angle d'incidence du second faisceau lumineux sur l'ensemble LCoS (123).

5. Appareil selon la revendication 3 ou 4, dans lequel une capacité de déviation de l'ensemble de conversion de chemin optique (122) pour la lumière diffractée d'ordre 0 est différente d'une capacité de déviation pour la lumière diffractée d'ordre +1.

6. Appareil selon l'une quelconque des revendications 1 à 5, dans lequel, lorsqu'un angle de diffraction de la lumière diffractée d'ordre +1 sur l'ensemble LCoS (123) est égal à un premier angle de diffraction, une perte de couplage de la lumière diffractée d'ordre +1 est la plus faible dans un processus allant de son émission depuis l'ensemble LCoS (123) jusqu'à sa délivrance par le port de sortie (124) de manière collimatée ; un angle de diffraction de la lumière diffractée d'ordre 0 sur l'ensemble LCoS (123) est inférieur au premier angle de diffraction, et un angle de diffraction de la lumière diffractée d'ordre +1 sur l'ensemble LCoS (123) est supérieur ou égal au premier angle de diffraction ; ou un angle de diffraction de la lumière diffractée d'ordre 0 sur l'ensemble LCoS (123) est supérieur au premier angle de diffraction, et un angle de diffraction de la lumière diffractée d'ordre +1 sur l'ensemble LCoS (123) est inférieur ou égal au premier angle de diffraction.

7. Appareil selon l'une quelconque des revendications 1 à 5, dans lequel un angle d'incidence du second faisceau lumineux sur l'ensemble LCoS (123) est supérieur à zéro.

8. Système optique, configuré pour : traiter un premier faisceau lumineux d'entrée dans un domaine fréquentiel, et délivrer un faisceau lumineux obtenu par traitement, dans lequel le système optique comprend un appareil de traitement optique (12), et l'appareil de traitement optique (12) est l'appareil de traitement optique (12) selon l'une quelconque revendication 1 à la revendication 6.
